# EUROPÄISCHE PATENTANMELDUNG

(11) **EP 1 099 543 A2**
(43) Veröffentlichungstag der Anmeldung: **16.05.2001**
(21) Anmeldenummer: 00123370.9
(22) Anmeldetag: 31.10.2000
(51) Int. Cl.: B32B 27/08

(54) **Mehrschichtige, biologisch abbaubare, thermoplastische Folien und Verfahren zu deren Herstellung sowie deren Verwendung als Verpackungsmaterial und in Kosmetik- und Hygiene-Artikeln**

(30) Priorität: 12.11.1999 DE 19954405
(71) Anmelder: Wolff Walsrode AG, 29665 Walsrode (DE)
(72) Erfinder: Kaschel, Gregor, Dr., 29699 Bomlitz (DE); Kleemiss, Michael, Dr., 30900 Wedemark (DE); Timmermann, Ralf, Dr., 47800 Krefeld (DE)
(74) Vertreter: Pettrich, Klaus-Günter, Dr.

(57) **Zusammenfassung**

Die vorliegende Erfindung betrifft eine mehrschichtige, biologisch abbaubare Folie aus unterschiedlichen biologisch abbaubaren Polymeren, die sich in ihrem molekularen Aufbau und Schmelztemperaturen unterscheiden. Die mehrschichtige, biologisch abbaubare und kompostierbare Folie kann sowohl unverstreckt als auch monoaxial oder biaxial verstreckt sein. Sie kann zur besseren Verarbeitbarkeit mit zusätzlichen Additiven ausgerüstet sein.

## Beschreibung

Die Erfindung betrifft eine mehrschichtige, biologisch abbaubare, thermoplastische Folie mit verbesserter Siegeleigenschaft.

Es ist bekannt, dass bestimmte biologisch abbaubare Polymere wie auch andere polymere Werkstoffe einem biologischen Abbau unterliegen können. Hauptsächlich sind hier Materialien zu nennen, die aus natürlich vorkommenden Polymeren direkt oder nach Modifzierung erhalten werden, beispielsweise Polyhydroxyalkanoate wie Polyhydroxybutyrat, plastische Cellulosen, Celluloseester, plastische Stärken, Chitosan und Pullulan. Eine gezielte Variation der Polymerzusammensetzung oder der Strukturen, wie sie von seiten der Polymeranwendung wünschenswert ist, ist aufgrund des natürlichen Synthesevorgangs nur schwer und oftmals nur sehr eingeschränkt möglich. Unter den Begriffen "biologisch abbaubare und kompostierbare Polymere bzw. Folien" werden im Sinne dieser Erfindung Güter verstanden, die entsprechend der Prüfung nach DIN V 54 900 von 1998/1999 die "Bioabbaubarkeit" testiert bekommen.

Viele der synthetischen Polymere hingegen werden durch Mikroorganismen nicht oder nur äußerst langsam angegriffen. Hauptsächlich synthetische Polymere, die Heteroatome in der Hauptkette enthalten, werden als potentiell biologisch abbaubar angesehen. Eine wichtige Klasse innerhalb dieser Materialien stellen die Polyester dar. Synthetische Rohstoffe, die nur aliphatische Monomere enthalten, weisen zwar eine relativ gute biologische Abbaubarkeit auf, sind aufgrund ihrer Materialeigenschaften nur äußerst eingeschränkt anwendbar; vergl. Witt et al. in Macrom. Chem. Phys., 195 (1994) S. 793- 802. Aromatische Polyester zeigen dagegen bei guten Materialeigenschaften deutlich verschlechterte, biologische Abbaubarkeit.

Seit neuerer Zeit sind verschiedene biologisch abbaubare Polymere bekannt (siehe DE 44 32 161). Diese besitzen die Eigenschaft, dass sie gut thermoplastisch verarbeitbar und auf der anderen Seite biologisch abbaubar sind, d.h. deren gesamte Polymerkette von Mikroorganismen (Bakterien und Pilzen) mittels Enzyme gespalten und vollständig zu Kohlendioxid, Wasser und Biomasse abgebaut werden. Ein entsprechender Test in natürlicher Umgebung unter Einwirkung von Mikroorganismen, wie es u.a. in einem Kompost vorherrscht, wird u.a. in der DIN V 54 900 gegeben. Diese biologisch abbaubaren Materialien können aufgrund des thermoplastischen Verhaltens zu Halbzeugen wie Gieß- oder Blasfilmen verarbeitet werden. Dennoch ist der Einsatz dieser Halbzeuge stark begrenzt. Zum einen zeichnen sich diese Filme durch schlechte mechanische Eigenschaften aus und zum anderen sind die Sperreigenschaften hinsichtlich Wasserdampf und Gasen im Vergleich zu Filmen aus typischen, jedoch nicht biologisch abbaubaren Kunststoffen wie Polyethylen, Polypropylen oder Polyamid sehr schlecht.

Bislang werden zum größten Teil einschichtige, biologisch abbaubare Folien hergestellt, die zum Teil über schlechte Siegeleigenschaften verfügen.

Es war überraschend, dass sich aus den biologisch abbaubaren Polymeren eine mehrschichtige Folie herstellen ließ, die über deutlich bessere Siegeleigenschaften als die entsprechenden einschichtigen Folien verfügt und sich zudem thermoplastisch verarbeiten sowie monoaxial oder biaxial verstrecken lassen. Die verbesserte Siegeleigenschaft der verstreckten und unverstreckten Folien macht sich im Gegensatz zu einer einschichtigen Folie durch eine geringere Verformung der Siegelnaht und eine höhere Siegelnahtfestigkeit bemerkbar.

Gegenstand der Erfindung ist eine biologisch abbaubare und kompostierbare mehrschichtige Folie aus mehreren biologisch abbaubaren Polymeren, enthaltend maximal 5 Gew.-%, z.B. 0 bis 5 Gew.-% Nukleierungsmitteln, maximal 5 Gew.-%, z.B. 0 bis 5 Gew.-% Stabilisator- und Neutralisationsmittel, maximal 5 Gew.-%, z.B. 0 bis 5 Gew.-% Gleit- und Trennmittel sowie maximal 5 Gew.-%, z.B. 0 bis 5 Gew.-% der Antiblockmittel in einer oder mehreren Schichten.

### Die Folie kann sowohl unverstreckt als auch monoaxial oder biaxial verstreckt sein.

Bevorzugt besitzen die eingesetzten Polymere deutlich unterschiedliche Schmelzpunkte, üblicherweise beträgt der Schmelzpunktunterschied mindestens 10°C, z.B. 10°C bis 20°C.

In einer besonderen Form kann die mehrschichtige Folie zusätzlich mit einer Coronaund/oder Flamm- und/oder Plasmavorbehandlung und/oder einem oxidativ wirkenden Stoff und/oder einem an-/ablagerbaren Stoff und/oder einem Stoffgemisch aus oxidativ wirkenden und/oder anlagerbaren Stoffen, z.B. Gase mit radikalischen Komponenten wie Ozon oder einem plasmaangeregten Gasgemisch aus beispielsweise Hexamethyldisiloxan mit Stickstoff (N₂) und/oder Sauerstoff (O₂), auf der Oberfläche behandelt werden. Dabei erfolgen die genannten Oberflächenvorbehandlungen bei den verstreckten Folien vorzugsweise nach der Orientierung.

Die monoaxiale oder biaxiale Orientierung erfolgt bei amorphen Thermoplasten in Temperaturbereichen oberhalb der Glasübergangstemperatur sowie bei teilkristallinen Thermoplasten oberhalb der Glasübergangstemperatur und unterhalb der Kristallitschmelztemperatur.

### Als Polymere für die erfindungsgemäße mehrschichtige Folie sind geeignet:

aliphatische oder teilaromatische Polyester aus
A) aliphatischen bifunktionellen Alkoholen, bevorzugt linearen C₂ bis C₁₀-Dial-koholen wie beispielsweise Ethandiol, Butandiol, Hexandiol oder besonders bevorzugt Butandiol und/oder gegebenenfalls cycloaliphatischen bifunktionellen Alkoholen, bevorzugt mit 5 oder 6 C-Atomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, bevorzugt C₃-C₁₂-Alkyl-diolen, wie beispielsweise Neopentyglykol, und zusätzlich gegebenenfalls geringen Mengen höherfunktionellen Alkoholen wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
B) aus säure- und alkoholfunktionalisierten Bausteinen, vorzugsweise mit 2 bis 12 C-Atomen in der Alkylkette beispielsweise Hydroxybuttersäure, Hydroxyvaleriansäure, Milchsäure, oder deren Derivaten, beispielsweise ε-Caprolacton oder Dilactid,
   oder einer Mischung und/oder einem Copolymer aus A und B, wobei die aromatischen Säuren nicht mehr als 50 Gew.-% Anteil, bezogen auf alle Säuren, ausmachen;
aliphatische oder teilaromatische Polyesterurethane aus
   C) aliphatischen bifunktionellen Alkoholen, bevorzugt linearen C₂ bis C₁₀-Dial-koholen wie beispielsweise Ethandiol, Butandiol, Hexandiol, besonders bevorzugt Butandiol und/oder gegebenenfalls cycloaliphatischen bifunktionellen Alkoholen, vorzugsweise mit C₅- oder C₆-cycloaliphatischem Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise C₃-C₁₂-Alkyldiolen, wie beispielsweise Neopentyglykol, und zusätzlich gegebenenfalls geringen Mengen höherfunktionellen Alkoholen, vorzugsweise C₃-C₁₂-Alkylpolyolen, wie beispielsweise 1,2,3-Propantriol oder Trimethylolpropan sowie aus aliphatischen bifunktionellen Säuren, vorzugsweise C₂-C₁₂-Alkyl-dicarbonsäuren, wie beispielsweise und bevorzugt Bernsteinsäure, Adipinsäure, und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
D) aus säure- und alkoholfunktionalisierten Bausteinen, vorzugsweise mit 2 bis 12 C-Atomen, beispielsweise Hydroxybuttersäure, Hydroxyvaleriansäure, Milchsäure, oder deren Derivaten, beispielsweise ε-Caprolacton oder Dilactid,
   oder einer Mischung und/oder einem Copolymer aus C und D, wobei die aromatischen Säuren nicht mehr als 50 Gew.-% Anteil, bezogen auf alle Säuren, ausmachen;
E) aus dem Reaktionsprodukt von C und/oder D mit aliphatischen und/oder cycloaliphatischen bifunktionellen und zusätzlich gegebenenfalls höherfunktionellen Isocyanaten, mit vorzugsweise 1 bis 12 C-Atomen bzw. 5 bis 8 C-Atomen im Falle von cycloaliphatischen Isocyanaten, z.B. Tetramethylendiisocyanat, Hexamethylendiisocyanat, Isophorondiisocyanat, gegebenenfalls zusätzlich mit linearen und/oder verzweigten und/oder cycloaliphatischen bifunktionellen und/oder höherfunktionellen Alkoholen, vorzugsweise C₃-C₁₂-Alkyldi- oder -polyole bzw. 5 bis 8 C-Atomen im Falle von cycloaliphatischen Alkoholen, z.B. Ethandiol, Hexandiol, Butandiol, Cyclohexandimethanol, und/oder gegebenenfalls zusätzlich mit linearen und/oder verzweigten und/oder cycloaliphatischen bifunktionellen und/oder höherfunktionellen Aminen und/oder Aminoalkoholen mit vorzugsweise 2 bis 12 C-Atomen in der Alkylkette, z.B. Ethylendiamin oder Aminoethanol, und/oder gegebenenfalls weitere modifizierte Amine oder Alkohole wie beispielsweise Ethylendiaminoethansulfonsäure, als freie Säure oder als Salz,
   wobei der Esteranteil C) und/oder D) mindestens 75 Gew.-%, bezogen auf die Summe aus C), D) und E), beträgt;
aliphatische oder aliphatisch-aromatische Polyestercarbonate aus
   F) aliphatischen bifunktionellen Alkoholen, bevorzugt linearen C₂ bis C₁₀-Dial-koholen wie beispielsweise Ethandiol, Butandiol, Hexandiol oder besonders bevorzugt Butandiol und/oder gegebenenfalls cycloaliphatischen bifunktionellen Alkoholen, vorzugsweise mit 5 bis 8 C-Atomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise mit C₂-C₁₂-Alkyldicarbonsäuren, wie beispielsweise Neopentyglykol und zusätzlich gegebenenfalls geringen Mengen höherfunktionellen Alkoholen wie beispielsweise 1,2,3-Propantriol, Trimethylolpropan sowie aus aliphatischen bifunktionellen Säuren wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
G) aus säure- und alkoholfunktionalisierten Bausteinen, vorzugsweise mit 2 bis 12 C-Atomen in der Alkylkette, beispielsweise Hydroxybuttersäure, Hydroxyvaleriansäure, Milchsäure, oder deren Derivaten, beispielsweise ε-Caprolacton oder Dilactid,
   oder einer Mischung und/oder einem Copolymer aus F und G, wobei die aromatischen Säuren nicht mehr als 50 Gew.-% Anteil, bezogen auf alle Säuren, ausmachen;
H) einem Carbonatanteil, der aus aromatischen bifunktionellen Phenolen, bevorzugt Bisphenol-A, und Carbonatspendern, beispielsweise Phosgen, hergestellt wird
   oder
   einem Carbonatanteil, der aus aliphatischen Kohlensäureestem oder deren Derivaten wie beispielsweise Chlorkohlensäureestern oder aliphatischen Carbonsäuren oder deren Derivaten wie beispielsweise Salzen und Carbonatspendern, beispielsweise Phosgen, hergestellt wird, wobei
   der Esteranteil F) und/oder G) mindestens 70 Gew.-%, bezogen auf die Summe aus F), G) und H) beträgt;
aliphatische oder teilaromatische Polyesteramide aus
   I) aliphatischen bifunktionellen Alkoholen, bevorzugt linearen C₂ bis C₁₀-Dial-koholen wie beispielsweise Ethandiol, Butandiol, Hexandiol, besonders bevorzugt Butandiol, und/oder gegebenenfalls cycloaliphatischen bifunktionellen Alkoholen, vorzugsweise mit 5 bis 8 C-Atomen, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise C₃-C₁₂-Alkyldiolen, wie beispielsweise Neopentyglykol und zusätzlich gegebenenfalls geringen Mengen höherfunktionellen Alkoholen, vorzugsweise C₃-C₁₂-Alkylpolyole, wie beispielsweise 1,2,3-Propantriol, Trimethylolpropan sowie aus aliphatischen bifunktionellen Säuren, vorzugsweise mit 2 bis 12 C-Atomen in der Alkylkette, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
   K) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure, oder deren Derivaten, beispielsweise ε-Caprolacton oder Dilactid,
      oder einer Mischung und/oder einem Copolymer aus I) und K), wobei die aromatischen Säuren nicht mehr als 50 Gew.-% Anteil, bezogen auf alle Säuren, ausmachen;
   L) einem Amidanteil aus aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder ggf. geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
M) aus einem Amidanteil aus säure- und aminfunktionalisierten Bausteinen, vorzugsweise mit 4 bis 20 C-Atomen in der cycloaliphatischen Kette, bevorzugt ω-Laurinlactam, ε-Caprolactam, besonders bevorzugt ε-Caprolactam,
   oder einer Mischung aus L) und M) als Amidanteil, wobeider Esteranteil I) und/oder K) mindestens 30 Gew.-%, bezogen auf die Summe aus I), K), L) und M) beträgt, vorzugsweise der Gewichtsanteil der Esterstrukturen 30 bis 70 Gew.-%, der Anteil der Amidstrukturen 70 bis 30 Gew.-% beträgt.

Bei den erfindungsgemäßen biologisch abbaubaren Polymeren kann es sich sowohl um reine Polymere als auch um Mischungen aus verschiedenen Polymeren handeln.

Die erfingungsgemäßen Polymere können mit maximal 5 Gew.-% für Polyester typisch eingesetzte Nukleierungsmitteln (beispielsweise 1,5-Naphthalindinatriumsulfonat oder Schichtsilikate, beispielsweise Talkum, oder Keimbildner der Nanoteilchengröße, d. h. mittlerer Teilchendurchmesser <1 µm, aus beispielsweise Titannitrid, Aluminiumhydroxylhydrat, Bariumsulfat oder Zirkonverbindungen) und mit maximal 5 Gew.-% der üblichen Stabilisatoren und Neutralisationsmittel und mit maximal 5 Gew.-%, z.B. 0,1 bis 5 Gew.-% der üblichen Gleit- und Trennmittel und maximal 5 Gew.-% der üblichen Antiblockmittel, ausgestattet und möglicherweise mit einer Corona- oder Flamm- oder Plasmavorbehandlung oder einem oxidativ wirkenden Stoff oder Stoffgemisch, z. B. Gase mit radikalischen Komponenten wie Ozon oder einem plasmaangeregten Gasgemisch aus beispielsweise Hexamethyldisiloxan mit Stickstoff (N₂) und/oder Sauerstoff (O₂), auf der Oberfläche behandelt sein.

Als Stabilisatoren und Neutralisationsmittel können die üblichen stabilisierend wirkenden Verbindungen für Polyesterverbindungen eingesetzt werden. Deren Zusatzmenge liegt maximal bei 5 Gew.-%.

Stabilisatoren werden in einer Menge von 0 bis 5 Gew.-%, insbesondere 0,1 bis 5 Gew.-% eingesetzt.

Besonders geeignet als Stabilisatoren sind phenolische Stabilisatoren, Alkali/Erdalkalistearate und/oder Alkali-/Erdalkalicarbonate. Phenolische Stabilisatoren werden in einer Menge von 0 bis 3 Gew.-%, insbesondere 0,15 bis 0,3 Gew.-% und mit einer Molmasse von mehr als 500 g/mol bevorzugt. Pentaerythrityl-Tetrakis-3(3,5-di-Tertiärbutyl-4-Hydroxyphenyl)-Propionat oder 1,3,5-Trimethyl-2,4,6-tris-(3,5-di-Tertiärbutyl-4-Hydroxybenzyl)-benzol sind besonders vorteilhaft.

Neutralisationsmittel sind vorzugsweise Dihydrotalcit, Calciumstearat, Calciumcarbonat und/oder Calciummontanat einer mittleren Teilchengröße von höchstens 0,7 µm, einer absoluten Teilchengröße von kleiner 10 µm und einer spezifischen Oberfläche von mindestens 40 m²/g.

In einer besonders bevorzugten Auführungsform der Folie besitzt diese einen Nukleierungsmittelanteil von 0,0001 bis 2 Gew.-% und einen Stabilisatoren- und Neutralisationsmittelanteil von 0,0001 bis 2 Gew.-%.

Gleit- und Trennmittel sind höhere aliphatische Amide, tertiäre Amine, aliphatische Säureamide, höhere aliphatische Säureester, niedrigmolekulare polarmodifizierte Wachse, Montanwachse, cyclische Wachse, Phthalate, Metallseifen sowie Silikonöle. Besonders geeignet ist der Zusatz von höheren aliphatischen Säureamiden und Silikonölen.

Unter den aliphatischen Amiden sind insbesondere die Angebotsformen von Ethylenamid bis Stearylamid geeeignet. Aliphatische Säureamide sind Amide einer wasserunlöslichen Monocarbonsäure (sogenannte Fettsäuren) mit 8 bis 24 Kohlenstoffatomen, vorzugsweise 10 bis 18 Kohlenstoffatomen. Erucasäureamid, Stearinsäureamid und Ölsäureamid sind hierunter bevorzugt.

Geeignet als Trenn- oder Gleitmittel sind außerdem Verbindungen, die sowohl Esterals auch Amidgruppen enthalten, wie beispielsweise Stearamid-Ethylstearat bzw. 2 Stear-Amido-Ethyl-Stearat.

Unter der Bezeichnung Montanwachse fällt ein Reihe von verschiedenen Verbindungen. Siehe hierzu Neumüller et al. in Römpps Chemie-Lexikon, Franckh'sche Verlagshandlung, Stuttgart, 1974.

Als cyclische Wachse sind beispielsweise Komponenten wie cyclische Adipinsäuretetramethylenester bzw. 1.6-Dioxa-2.7-dioxocyclododecan, oder das homologe Hexamethylenderivat geeignet. Solche Stoffe sind als Handelsprodukte mit dem Namen Glycolube VL bekannt.

Geeignete Silikonöle sind Polydialkylsiloxane, vorzugsweise Polydimethylsiloxan, Polymethylphenylsiloxan, olefinmodifiziertes Silikon, mit Polyethern modifiziertes Silikon wie z. B. Polyethylenglykol und Polypropylenglykol sowie epoxyamino- und alkoholmodifiziertes Silikon. Die Viskosität der geeigneten Silikonöle liegt im Bereich von 5 000 bis 1 000 000 mm^{2/}s. Polydimenthylsiloxan mit einer Viskosität von 10.000 bis 100.000 mm^{2/}s ist bevorzugt.

Die Menge des zugesetzten Gleitmittels beträgt maximal 5 Gew.-%. In einer besonders bevorzugten Ausführungsform der Folie besitzt diese einen Gleitmittelanteil von 0,005 bis 4 Gew.-%. In einer ganz besonders bevorzugten Ausführungsform der Folie besitzt diese einen Gleitmittelanteil von 0,05 bis 1 Gew.-%.

Geeignete Antiblockmittel sind sowohl anorganische als auch organische Zusatzstoffe, die als Erhebung aus der Folienoberfläche herausragen und somit einen Abstandshaltereffekt hervorrufen. Bevorzugt enthalten die Deckschichten das Antiblockmittel.

In einer bevorzugten Form werden als anorganische Antiblockmittel die folgenden Stoffe eingesetzt:
Aluminiumhydroxid
Aluminiumsilikate, beispielsweise Kaolin oder Kaolinton,
Aluminiumoxide, beispielsweise Θ-Aluminiumoxid
Aluminiumsulfat
Keramiken aus Silica-Aluminiumoxiden
Bariumsulfat
natürliche und synthetische Kieselsäuren
Schichtsilikate, beispielsweise Asbest,
Siliciumdioxid
Calciumcarbonat vom Calcit-Typ
Calciumphosphat
Magnesiumsilikate
Magnesiumcarbonat
Magnesiumoxid
Titandioxid
Zinkoxid
Microglaskugeln
und als organische Antiblockmittel die folgenden Stoffe eingesetzt:
mit dem biologisch abbaubaren Polymer unverträgliche organische Polymerisate wie
Stärke
Polystyrole
Polyamide
Polycarbonate
vernetztes und unvernetztes Polymethylmethacrylat
vernetztes Polysiloxan (z.B. Tospearl)
polarmodifizierts Polyethylen (z.B. Maleinsäureanhydrid-gepfropftes Polyethylen)
polarmodifizierts Polypropylen (z.B. Maleinsäureanhydrid-gepfropftes Polypropylen)
statistische Copolymer auf Ethylen- oder Propylenbasis mit Vinylalcohol oder Vinylacetat oder Acrylsäure oder Acrylsäureester oder Methacrylsäure oder Methacrylsäureester oder Metallsalzen der Methacrylsäure oder Metallsalze der Methacrylsäureester
Benzoguanamin Formaldehyd Polymere aliphatische und teilaromatische Polyester mit anderen Schmelzpunkten als der Folienrohstoff
aliphatische Polyesteramide mit anderen Schmelzpunkten als der Folienrohstoff aliphatische Polyesterurethane mit anderen Schmelzpunkten als der Folienrohstoff aliphatisch-aromatische Polyestercarbonate mit anderen Schmelzpunkten als der Folienrohstoff

Die wirksame Menge an Antiblockmittel liegt im Bereich bis maximal 5 Gew.-%. In einer besonders bevorzugten Ausführung enthält die Folie 0,005 bis 4 Gew.-% Antiblockmittel. In einer ganz besonders bevorzugten Ausführung enthält die Folie 0,05 bis 1 Gew.-% Antiblockmittel. Die mittlere Teilchengröße liegt zwischen 1 und 6 µm, insbesondere 2 und 5 µm, wobei Teilchen mit einer kugelförmigen Gestalt, wie in der EP-A-0 236 945 und der DE-A-38 01 535 beschrieben, besonders geeignet sind. Besonders geeignet sind auch Kombinationen verschiedener Abstandshaltersysteme.

Nach den bisher angewandten Verfahren werden die Polymere für die mit Additiven versehene Folie bei der Rohstoffherstellung mit den gewünschten Gewichtsmengen an organischen oder anorganischen Füllstoffen ausgerüstet. Dies geschieht beim Granulieren des Rohstoffs beispielsweise in Zweischneckenextrudern, wo dem Rohstoff die Additive zugegeben werden. Neben dieser Art der Additivierung besteht auch die Möglichkeit, dass ein Teil oder alle notwendigen Additive einem nicht oder teilweise ausgerüsteten Rohstoff in Form eines Masterbatches zugegeben werden. Unter dem Begriff Masterbatch ist im Rahmen der vorliegenden Erfindung eine Stammischung zu verstehen, insbesondere ein granulatförmiges staubfreies Konzentrat eines Kunststoffrohstoffes mit hohen Mengen an Additiven, das in der Masseaufbereitung als Zwischenprodukt verwendet wird (als Materialzusatz zu einem nicht oder nur teilweise oder unvollständig mit Additiven ausgerüstetem Granulat), um daraus Folien herzustellen, die eine bestimmte Menge an Additiven enthalten. Das Masterbatch wird vor dem Einfüllen des Polymergranulates in den Extruder in derartigen Mengen zu den nicht oder nur teilweise oder unvollständig mit Additiven ausgerüsteten Rohstoffen zugemischt, so dass die gewünschten Gewichtsprozentanteile an Füllstoffen in den Folien realisiert werden. Die Materialien, aus denen neben den Additiven die Masterbatche hergestellt werden, in einer besonders bevorzugten Form ebenfalls biologisch abbaubar, biologisch unbedenklich, oder haben einen Gewichtsanteil, der kleiner als 1 Gew.-% ist.

Die bevorzugten Materialien, aus denen neben den Additiven die Masterbatche hergestellt werden, sind Stoffe, die mit den in dieser Erfindung genannten Polymeren verträglich sind.

Bei der Coronabehandlung wird zwecksmäßigerweise so vorgegangen, dass die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, dass Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so dass zusätzlich polare Einlagerungen in der Polymermatrix entstehen.

Für eine Flammbehandlung mit polarisierter Flamme (vgl. US-A-4.622.237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Bei einer Plasmavorbehandlung werde in einer Niederdruckkammer Gase, z. B. Sauerstoff oder Stickstoff oder Kohlendioxid oder Methan oder Halogenkohlenwasserstoffe oder Silanverbindungen oder höhermolekulare Verbindungen oder auch Mischungen hiervon, einem hochenergiereichen Feld, z. B. Mikrowellenstrahlung, ausgesetzt. Es entstehen hochenergiereiche Elektronen, die auf die Moleküle treffen und ihre Energien übertragen. Hierdurch entstehen lokal radikalische Strukturen, deren Anregungszustände Temperaturen von einigen zehntausend Grad Celsius entsprechen, obwohl das Plasma selbst sich nahezu auf Raumtemperatur befindet. Dadurch besteht die Möglichkeit, chemische Bindungen aufzubrechen und Reaktionen in Gang zu setzen, die normalerweise erst bei hohen Temperaturen ablaufen können. Es bilden sich Monomerradikale und Ionen. Aus den entstandenen Monomerradikalen bilden sich - teilweise schon im Plasma - kurzkettige Oligomere, die dann auf der zu beschichtenden Oberfläche kondensieren und polymerisieren. Auf dem Beschichtungsgut scheidet sich dadurch ein homogener Film ab.

Bevor sich jedoch die Monomerradikale bzw. Ionen auf dem Substrat abscheiden, besteht außerdem zusätzlich die Möglichkeit, in der sogenannten After-Glow-Zone einen weiteren Stoffstrom den angeregten Molekülen hinzuzufügen. Hierdurch ist es möglich, einen Stoff oder ein Stoffgemisch zu erzeugen, das bei dem Auftreffen auf der Polymerfilmoberfläche einen oxidativen Angriff bei den Substratpolymeren erzeugt. Es bildet sich eine glasartige und meist hochvernetzte Schicht, die mit der Folienoberfläche fest verbunden ist. Bei geeigneter Stoffzusammensetzung ergibt sich hierdurch einen Anstieg der Oberflächenspannung auf der Folie.

Die erfindungsgemäße biologisch abbaubare und kompostierbare mehrschichtige Folie kann Pigmente zur Einfärbung enthalten. Dabei kann es sich um organische oder anorganische Pigmente, die der Deckschicht, der Zwischenschicht oder den Zwischenschichten oder allen Schichten zugegeben werden. In einer besonders bevorzugten Form sind die Pigmente biologisch unbedenklich und/oder haben eine Konzentration von weniger als 1 Gew.-%.

Die Herstellung der erfindungsgemäßen unverstreckten mehrschichtigen Folie geschieht über ein Extrusionsverfahren. Die in Granulatform vorliegenden Polymere werden in Extrudern aufgeschmolzen homogenisiert, komprimierert und über eine Mehrschichtdüse ausgetragen. Dabei kann es sich bei der Düse um eine Ringdüse zur Herstellung eines nahtlosen Schlauchfilms handeln. Der so ausgetragene bzw. z.B. mittels Walzenpresseuren ausgezogene Film wird anschließend bis zur Verfestigung abgekühlt. Die Kühlung kann dabei sowohl über Luft als auch über Wasser oder auch mittels Kühlwalzen erfolgen. Die Kühlung kann dabei einseitig oder beidseitig, im Falle einer Schlauchfolie innen- und außenseitig oder nur innen- oder nur außenseitig erfolgen. Die Schlauchfolie kann zudem einseitig oder beidseitig geschnitten werden, so dass man eine mehrschichtigen unverstreckte Flachfolie erhält.

Die Schlauchfolie kann weiterhin als Primärschlauch nach der Abkühlung und bei teilkristallinen Werkstoffen unter Kristallitschmelztemperatur und bei amorphen Werkstoffen oberhalb der Glasübergangstemperatur temperiert und dann biaxial, idealerweise simultan verstreckt werden. Ein besonders geeignetes Verfahren ist dabei das simultane biaxiale Recken mittels Double-Bubble-Technologie, bei der die Verstreckung einer Primärblase über einen anliegenden Innendruck erfolgt. Zur gezielten Einstellung von Schrumpfeigenschaften kann die Folie anschließend einer Wärmebehandlung unterzogen werden. Die Folie kann in diesem Fixierprozess wieder bis kurz unter die Kristallitschmelztemperatur erwärmt werden.

Die Schlauchfolie kann anschließend einer innen- oder außenseitigen Oberflächenbehandlung unterzogen werden.

Gegenstand der Erfindung ist darüber hinaus ein Extrusionsverfahren zur Herstellung der erfindungsgemäßen mehrschichtigen Folie, bei dem die Mehrschichtdüse als Flachdüse zur Herstellung eines mehrschichtigen Flachfilms ausgeführt ist. Der ausgetragene Film wird anschließend bis zur Verfestigung abgekühlt. Die Kühlung kann über Wasser mittels Kühlwalzen erfolgen.

Nach der Abkühlung kann der Flachfilm bei teilkristallinen Werkstoffen auf Temperaturen unterhalb der Kristallit-Schmelzetemperatur und bei amorphen Werkstoffen oberhalb der Glasübergangstemperatur temperiert und anschließend ein oder mehrfach monoaxial oder biaxial verstreckt werden. Nach der oder den Verstreckstufen kann jeweils optional eine Fixierung des Films erfolgen. Nach den Verstreckvorgängen und den möglicherweise vorherrschenden Fixierstufen kann der somit gefertigte Film eventuell in-line oberflächenvorbehandelt werden.

Darüber hinaus kann die erfindungsgemäße Folie auch als monoaxiale oder biaxiale verstreckte Folie hergestellt werden. Die biaxiale Verstreckung kann im Simultanreckverfahren oder im zweistufigen sequentiellen Verfahren, wobei sowohl zuerst längs- und dann quergereckt als auch zuerst quer- und dann längsgereckt werden kann, oder im dreistufigen sequentiellen Verfahren, wobei sowohl zuerst längs-, dann quer- und abschließend längsgereckt als auch zuerst quer-, dann längs- und abschließend quergereckt werden kann, oder im vierstufigen sequentiellen Verfahren, wobei sowohl zuerst längs-, dann quer-, dann längs- und abschließend quergereckt als auch zuerst quer, dann längs-, dann quer- und abschließend längsgereckt werden kann, erfolgen. An jede einzelne Verstreckung kann sich eventuell eine Fixierung des Films anschließen. Die einzelne Verstreckung jeweils in Längs- und Querrichtung kann dabei ein- oder mehrstufig erfolgen.

In einer bevorzugten Form der erfindungsgemäßen Folie ist die biaxiale Verstreckung dadurch gekennzeichnet, dass es sich um ein sequentielles Verfahren handelt, das mit der Längsreckung beginnt.

In einer noch mehr bevorzugten Form der erfindungsgemäßen Folie ist die monoaxiale Verstreckung dadurch gekennzeichnet, dass das Reckverhältnis in Längsrichtung 1 : 1,5 bis 1:10 beträgt.

In einer noch mehr bevorzugten Form der erfindungsgemäßen Folie ist die monoaxiale Verstreckung dadurch gekennzeichnet, dass das Reckverhältnis in Längsrichtung 1 : 2,8 bis 1 : 8 beträgt.

In einer noch mehr bevorzugten Form der erfindungsgemäßen Folie ist die biaxiale Verstreckung dadurch gekennzeichnet, dass das Gesamtreckverhältnis in Längsrichtung 1 : 1,5 bis 1 : 10 und das Gesamtreckverhältnis in Querrichtung 1 : 2 bis 1 : 20 beträgt.

In einer noch mehr bevorzugten Form der erfindungsgemäßen Folie ist die biaxiale Verstreckung dadurch gekennzeichnet, dass das Gesamtreckverhältnis in Längsrichtung 1 : 2,8 bis 1 : 8 und das Gesamtreckverhältnis in Querrichtung 1 : 3,8 bis 1 : 15 beträgt.

In einer noch mehr bevorzugten Form der erfindungsgemäßen Folie besitzt diese eine Dicke, die kleiner als 500 µm ist.

In einer noch mehr bevorzugten Form der erfindungsgemäßen Folie besitzt diese eine Dicke, die kleiner als 150 µm ist.

Gegenstand der Erfindung ist darüber hinaus die Anwendung der erfindungsgemäßen Folie. Als Anwendung kommt der Einsatz dieser Folie als mehrschichtige Folie in vorbehandelter oder unvorbehandelter sowie in bedruckter, unbedruckter oder lackierter Form für die Verpackung in den Bereichen Lebensmitteln und Nichtlebensmitteln oder als mehrschichtige Folie in vorbehandelter oder unvorbehandelter Form für Schutz- und Trennfunktionen im Zusammenhang mit Kosmetik und Hygieneartikeln, beispielsweise für Babywindeln oder Damenbinden.

Gegenstand der Erfindung ist darüber hinaus die Anwendung der erfindungsgemäßen mehrschichtigen Folie als beschichtete Folie oder in einem Folienverbund. Dabei kann es sich bei den anderen Folien des Verbundes um nichtabbaubare Folie oder auch um biologisch abbaubare und kompostierbare Folien handeln. Außerdem können die eingesetzten Beschichtungs- oder Klebstoffe sowohl zu den normalen nichtabbaubaren Systemen als auch zu den biologisch abbaubaren und kompostierbaren Rohstoffen gehören.

In einer besonders bevorzugten Form der Anwendung dieser erfindungsgemäßen mehrschichtigen Folie werden zur Herstellung der beschichteten Folie oder eines Folienverbundes nur solche Stoffe eingesetzt, dass der Gesamtverbund ebenfalls biologisch abbaubar und kompostierbar gemäß der DIN V 54900 ist.

### Beispiele

### Beispiel 1

Aus zwei unterschiedlichen biologisch abbaubaren und kompostierbaren Polymeren wurde an einer Drei-Schicht-Blasfolienanlage ein symmetrischer, coextrudierter Film mit einem ABA-Aufbau hergestellt. Das Material A (LP BAK 403-004, Bayer AG) hat einen MFI von 7 (in g/10min bei 190°C, 2,16kg, gemessen nach DIN 53 735), einen Schmelzpunkt von 125°C, gemessen nach ISO 3146 / C2, einen Anteil an Gleitmittel von 0,15 Gew.-% und einen Antiblockanteil bzw. Nukleierungsmittelgehalt von 0,1 Gew.-%. Das Material B (LP BAK 404-002, Bayer AG) hat einen MFI von 9 (in g/lOmin bei 190°C, 2,16kg, gemessen nach DIN 53 735), einen Schmelzpunkt von 140°C, gemessen nach ISO 3146 / C2 und einen Antiblockanteil bzw. Nukleierungsmittelgehalt von 0,1 Gew.-%. Die maximale Extrusionstemperatur betrug 190°C. Die Schmelze wurde über eine Mehrschichtringdüse ausgetragen und durch Luft abgekühlt. Die maximale Düsentemperatur betrug ebenfalls 185°C. Es wurde in diesem Fall eine Folie mit einer Gesamtdicke von 85 µm in einer Breite von 700mm hergestellt, wobei das Material A mit dem niedrigen Schmelzpunkt die Außenschichten bildet.

### Beispiel 2

Aus den gleichen biologisch abbaubaren Polymeren A und B aus Beispiel 1, die jedoch anders additiviert waren (Material A: Anteil an Gleimittel 1 Gew.-%, Anteil an Antiblock- bzw. Nukleierungsmittel 0,1 Gew.-%; Material B: Anteil an Gleimittel 0,2 Gew.-%, Anteil an Antiblock- bzw. Nukleierungsmittel 0,1 Gew.-%) wurde die gleiche dreischichtige Folie im symmetrischen ABA-Aufbau als Flachfilm im Chillroll-Verfahren hergestellt. Die dreischichtige Folie wurde coextrudiert und anschließend sequentiell biaxial verstreckt. Die maximale Extrusionstemperatur betrug beim Material A 180°C, beim Material B 190°C. Die Schmelze wurde als Flachfilm auf einem Kühlwalzenstuhl bei Walzentemperaturen von 43°C an der Gießwalze und 22°C an der Kühlwalze abgekühlt. Es entstand ein fester Dickfilm, der im nächsten Verfahrensschritt durch Temperierwalzen mit Temperaturen von 82°C auf Verstrecktemperatur aufgeheizt wurde. Die eigentlichen Reckwalzen wurden bei einer Temperatur von 85°C betrieben. Dabei wurde der Flachfilm in einer Stufe um das Verhältnis 1 : 4,2 in Längsrichtung verstreckt. Die Nachheizwalzen, über die der Film danach lief, besaßen eine Temperatur von 50°C. Die Vorheizzonen des Querreckofens wurden auf 130°C temperiert. Die Temperatur im eigentlichen Querreckteil betrug 120°C. Hier wurde der Film um das Verhältnis 1 : 4,6 in Querrichtung verstreckt. Es ergab sich somit ein rechnerisches Flächenreckverhältnis von 1 : 19,3. Nach der Querreckung wurde der Film bei einer Temperatur von 105°C fixiert. Die Produktionsgeschwindigkeit am Auslauf des Querrecks betrug 18,0 m/min. Es konnte ein Film mit einer Dicke von 80 µm produziert werden.

### Vergleichsbeispiel

Aus dem biologisch abbaubaren Polymer Material A aus Beispiel 2 wurde an einer Blasfolienanlage eine einschichtige Folie hergestellt. Die maximale Extrusionstemperatur betrug 160°C. Die Schmelze wurde über eine Ringdüse ausgetragen und durch Luft abgekühlt. Die maximale Düsentemperatur betrug ebenfalls 160°C. Es wurde in diesem Fall eine Folie mit einer Dicke von 95µm in einer Breite von 300mm hergestellt.

An den gefertigten Mustern wurden die folgenden physikalischen Eigenschaften wie folgt gemessen:

### Mechanische Eigenschaften:

An den Proben wurden die mechanischen Größen Reißfestigkeit und Reißdehnung sowohl in Längs- als auch in Querrichtung gemäß DIN 53 455 bestimmt. Der E-Modul in Längs- und Querrichtung wurde entsprechend der DIN 53 457 bestimmt. Die Dicke der einzelnen Muster wurde nach DIN 53 370 bestimmt.

### Permeationseigenschaften:

An den Proben wurde die Durchlässigkeit von Sauerstoff bei einer Temperatur von 23°C und einer relativen Feuchte von 75 % nach DIN 53 380 gemessen. Weiterhin wurde die Durchlässigkeit von Wasserdampf bei einer Temperatur von 23°C und einer relativen Feuchte von 85 % gemäß DIN 53 122 bestimmt.

### Siegelnahtfestigkeiten:

An den Proben wurde die Festigkeit von Siegelnähten, die an einem Siegelgerät mit beidseitig beheiztem Siegelwerkzeug gefertigt wurden, bestimmt. Unter der Siegelfestigkeit wird die Höchstkraft verstanden, die erforderlich ist, um eine unter definierten Bedingungen (Druck, Zeit, Temperatur) hergestellte Siegelnaht zu trennen. Die Siegelnaht wird in N angegeben, die Streifenbreite als Index hinzugefügt (N/15 mm). Der Siegelbereich ist der Temperaturbereich, in dem eine messbare Siegelfestigkeit vorhanden ist.

Aus der zu prüfenden Folienbahn wurden zwei fehlerfreie, saubere Probenstreifen entnommen. Zur Siegelung wurden sie mit den zu versiegelnden Flächen aufeinandergelegt und so zwischen die Siegelbacken gehalten, dass die Probe an jeder Seite mindestens 1cm überstand. Die Siegelung muss senkrecht zur Folienlaufrichtung erfolgen.

Die Siegelfestigkeitsprüfung erfolgte nach folgender Standardbedingung:

| | |
|---|---|
| Druck | 50 N/cm² |
| Zeit | 0,5sec |
| Temperatur | in 10 K-Schritten ab 150°C. |

Aus der hergestellten Siegelnaht wurde aus der Mitte exakt in Folienlaufrichtung mit einem Prüfstreifenschneider ein 15 mm breiter Prüfstreifen geschnitten. Mit einer Zugfestigkeitsmaschine wurde er auf Siegelfestigkeit untersucht, indem er senkrecht zur Siegelnaht getrennt wurde. Angegeben wurde jeweils der Maximalwert der beim Zerreißen auftretenden Kraft.

Die Ergebnisse der Untersuchungen an den Proben aus Beispiel 1, 2 und 3 sowie dem Vergleichsbeispiel sind in der Tabelle aufgeführt. Im Vergleich zur dreischichtigen Blasfolie aus Beispiel 1, ist die Siegelnahtfestigkeit der einschichtigen Blasfolie aus dem Vergleichbeispiel wesentlich niedriger.

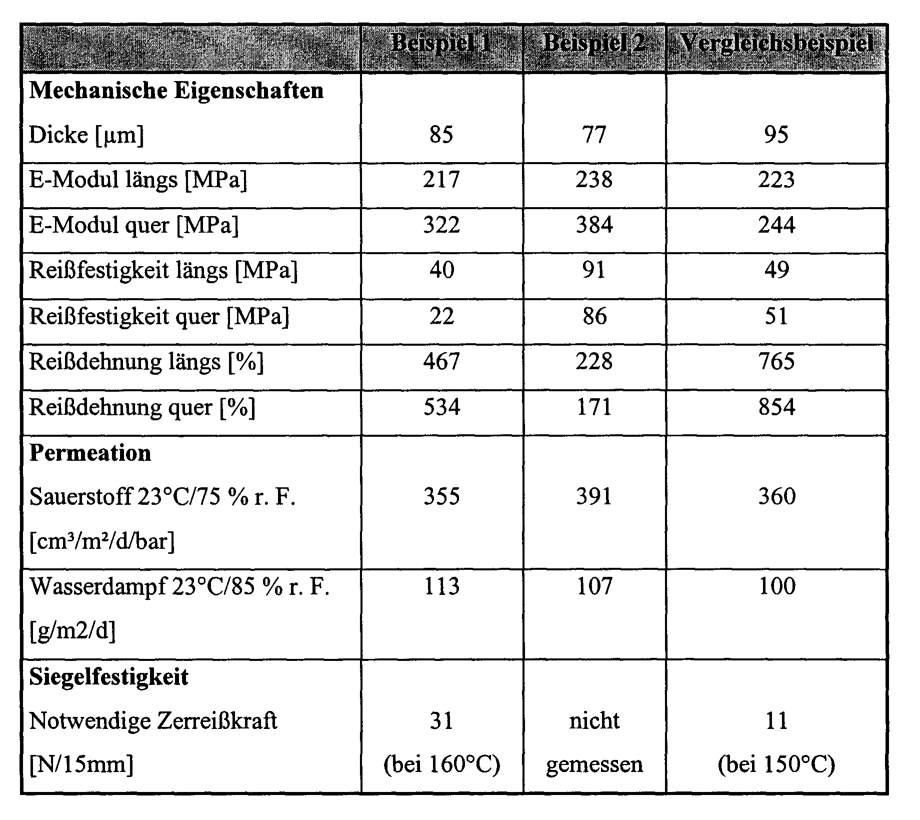

## Patentansprüche

1. Biologisch abbaubare und kompostierbare, mehrschichtige Folie aus mehreren biologisch abbaubaren und kompostierbaren Polymeren, enthaltend maximal 5 Gew.-% Nukleierungsmittel, 0 bis maximal 5 Gew.-% Stabilisator- und Neutralisationsmittel, 0 bis maximal 5 Gew.-% Gleit- und Trennmittel sowie 0 bis maximal 5 Gew.-% Antiblockmittel in einer oder mehreren Schichten, wobei sich die Konzentrationsangaben auf die Gesamtmasse der Folie beziehen.Z

2. Biologisch abbaubare und kompostierbare, mehrschichtige Folie, gemäß Anspruch 1, dadurch gekennzeichnet, dass die Folie aus verschiedenen biologisch abbaubaren und kompostierbaren Polymeren, die unterschiedliche Schmelzpunkte haben, besteht.

3. Biologisch abbaubare und kompostierbare, mehrschichtige Folie, gemäß Anspruch 1 bis 2, dadurch gekennzeichnet, dass die Schichten mit den niedrigsten Schmelzpunkten außen angeordnet sind.

4. Biologisch abbaubare und kompostierbare, mehrschichtige Folie, gemäß Anspruch 1 bis 3, dadurch gekennzeichnet, dass es sich bei den biologisch abbaubaren und kompostierbaren Polymeren um
aliphatische oder teilaromatische Polyester aus
A) aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, bevorzugt mit 5 oder 6 CAtomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, bevorzugt C₃-C₁₂-Alkyldiolen, wie beispielsweise Neopentyglykol, und zusätzlich gegebenenfalls geringen Mengen höherfunktionellen Alkoholen wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
B) aus säure- und alkoholfunktionalisierten Bausteinen, vorzugsweise mit 2 bis 12 C-Atomen in der Alkylkette beispielsweise Hydroxybuttersäure, Hydroxyvaleriansäure, Milchsäure, oder deren Derivaten, beispielsweise s-Caprolacton oder Dilactid,
oder einer Mischung und/oder einem Copolymer aus A und B, wobei die aromatischen Säuren nicht mehr als 50 Gew.-% Anteil, bezogen auf alle Säuren, ausmachen;
aliphatische oder teilaromatische Polyesterurethane aus
C) aliphatischen bifunktionellen Alkoholen, bevorzugt linearen C₂ bis C₁₀-Dialkoholen wie beispielsweise Ethandiol, Butandiol, Hexandiol, besonders bevorzugt Butandiol und/oder gegebenenfalls cycloaliphatischen bifunktionellen Alkoholen, vorzugsweise mit C₅- oder C₆-cycloaliphatischem Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise C₃-C₁₂Alkyldiolen, wie beispielsweise Neopentyglykol, und zusätzlich gegebenenfalls geringen Mengen höherfunktionellen Alkoholen, vorzugsweise C₃-C₁₂-Alkylpolyolen, wie beispielsweise 1,2,3-Propantriol oder Trimethylolpropan sowie aus aliphatischen bifunktionellen Säuren, vorzugsweise C₂-C₁₂-Alkyldicarbonsäuren, wie beispielsweise und bevorzugt Bernsteinsäure, Adipinsäure, und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
D) aus säure- und alkoholfunktionalisierten Bausteinen, vorzugsweise mit 2 bis 12 C-Atomen, beispielsweise Hydroxybuttersäure, Hydroxyvaleriansäure, Milchsäure, oder deren Derivaten, beispielsweise ε-Caprolacton oder Dilactid,
oder einer Mischung und/oder einem Copolymer aus C und D, wobei die aromatischen Säuren nicht mehr als 50 Gew.-% Anteil, bezogen auf alle Säuren, ausmachen;
E) aus dem Reaktionsprodukt von C und/oder D mit aliphatischen und/oder cycloaliphatischen bifunktionellen und zusätzlich gegebenenfalls höherfunktionellen Isocyanaten, mit vorzugsweise 1 bis 12 C-Atomen bzw. 5 bis 8 C-Atomen im Falle von cycloaliphatischen Isocyanaten, z.B. Tetramethylendiisocyanat, Hexamethylendiisocyanat, Isophorondiisocyanat, gegebenenfalls zusätzlich mit linearen und/oder verzweigten und/oder cycloaliphatischen bifunktionellen und/oder höherfunktionellen Alkoholen, vorzugsweise C₃-C₁₂-Alkyldi- oder -polyole bzw. 5 bis 8 C-Atomen im Falle von cycloaliphatischen Alkoholen, z.B. Ethandiol, Hexandiol, Butandiol, Cyclohexandimethanol, und/oder gegebenenfalls zusätzlich mit linearen und/oder verzweigten und/oder cycloaliphatischen bifunktionellen und/oder höherfunktionellen Aminen und/oder Aminoalkoholen mit vorzugsweise 2 bis 12 C-Atomen in der Alkylkette, z.B. Ethylendiamin oder Aminoethanol, und/oder gegebenenfalls weitere modifizierte Amine oder Alkohole wie beispielsweise Ethylendiaminoethansulfonsäure, als freie Säure oder als Salz,
wobei der Esteranteil C) und/oder D) mindestens 75 Gew.-%, bezogen auf die Summe aus C), D) und E), beträgt;
aliphatische oder aliphatisch-aromatische Polyestercarbonate aus
F) aliphatischen bifunktionellen Alkoholen, bevorzugt linearen C₂ bis C₁₀-Dialkoholen wie beispielsweise Ethandiol, Butandiol, Hexandiol oder besonders bevorzugt Butandiol und/oder gegebenenfalls cycloaliphatischen bifunktionellen Alkoholen, vorzugsweise mit 5 bis 8 C-Atomen im cycloaliphatischen Ring, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise mit C₂-C₁₂-Alkyldicarbonsäuren, wie beispielsweise Neopentyglykol und zusätzlich gegebenenfalls geringen Mengen höherfunktionellen Alkoholen wie beispielsweise 1,2,3-Propantriol, Trimethylolpropan sowie aus aliphatischen bifunktionellen Säuren wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
G) aus säure- und alkoholfunktionalisierten Bausteinen, vorzugsweise mit 2 bis 12 C-Atomen in der Alkylkette, beispielsweise Hydroxybuttersäure, Hydroxyvaleriansäure, Milchsäure, oder deren Derivaten, beispielsweise s-Caprolacton oder Dilactid,
oder einer Mischung und/oder einem Copolymer aus F und G, wobei die aromatischen Säuren nicht mehr als 50 Gew.-% Anteil, bezogen auf alle Säuren, ausmachen;
H) einem Carbonatanteil, der aus aromatischen bifunktionellen Phenolen, bevorzugt Bisphenol-A, und Carbonatspendern, beispielsweise Phosgen, hergestellt wird
oder
einem Carbonatanteil, der aus aliphatischen Kohlensäureestern oder deren Derivaten wie beispielsweise Chlorkohlensäureestern oder aliphatischen Carbonsäuren oder deren Derivaten wie beispielsweise Salzen und Carbonatspendern, beispielsweise Phosgen, hergestellt wird, wobei
der Esteranteil F) und/oder G) mindestens 70 Gew.-%, bezogen auf die Summe aus F), G) und H) beträgt;
aliphatische oder teilaromatische Polyesteramide aus
I) aliphatischen bifunktionellen Alkoholen, bevorzugt linearen C₂ bis C₁₀-Dialkoholen wie beispielsweise Ethandiol, Butandiol, Hexandiol, besonders bevorzugt Butandiol, und/oder gegebenenfalls cycloaliphatischen bifunktionellen Alkoholen, vorzugsweise mit 5 bis 8 C-Atomen, wie beispielsweise Cyclohexandimethanol, und/oder teilweise oder vollständig statt der Diole monomere oder oligomere Polyole auf Basis Ethylenglykol, Propylenglykol, Tetrahydrofuran oder Copolymere daraus mit Molekulargewichten bis 4000, bevorzugt bis 1000, und/oder gegebenenfalls geringen Mengen verzweigten bifunktionellen Alkoholen, vorzugsweise C₃-C₁₂-Alkyldiolen, wie beispielsweise Neopentyglykol und zusätzlich gegebenenfalls geringen Mengen höherfunktionellen Alkoholen, vorzugsweise C₃-C₁₂-Alkylpolyole, wie beispielsweise 1,2,3-Propantriol, Trimethylolpropan sowie aus aliphatischen bifunktionellen Säuren, vorzugsweise mit 2 bis 12 C-Atomen in der Alkylkette, wie beispielsweise und bevorzugt Bernsteinsäure, Adipinsäure und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren wie beispielsweise Trimellitsäure oder
K) aus säure- und alkoholfunktionalisierten Bausteinen, vorzugsweise mit 2 bis 12 C-Atomen in der Kohlenstoffkette, beispielsweise Hydroxybuttersäure, Hydroxyvaleriansäure, Milchsäure, oder deren Derivaten, beispielsweise s-Caprolacton oder Dilactid,
oder einer Mischung und/oder einem Copolymer aus I) und K), wobei die aromatischen Säuren nicht mehr als 50 Gew.-% Anteil, bezogen auf alle Säuren, ausmachen;
L) einem Amidanteil aus aliphatischen und/oder cycloaliphatischen bifunktionellen und/oder gegebenenfalls geringen Mengen verzweigten bifunktionellen Aminen, bevorzugt sind lineare aliphatische C₂ bis C₁₀-Diamine, und zusätzlich gegebenenfalls geringen Mengen höherfunktionellen Aminen, unter den Aminen bevorzugt Hexamethylendiamin, Isophorondiamin und besonders bevorzugt Hexamethylendiamin, sowie aus linearen und/oder cycloaliphatischen bifunktionellen Säuren, vorzugsweise mit 2 bis 12 C-Atomen in der Alkylkette bzw. C₅- oder C₆-Ring im Falle von cycloaliphatischen Säuren, bevorzugt Adipinsäure, und/oder ggf. geringen Mengen verzweigten bifunktionellen und/oder gegebenenfalls aromatischen bifunktionellen Säuren wie beispielsweise Terephthalsäure, Isophthalsäure, Naphthalindicarbonsäure und zusätzlich gegebenenfalls geringen Mengen höherfunktionellen Säuren, vorzugsweise mit 2 bis 10 C-Atomen, oder
M) aus einem Amidanteil aus säure- und aminfunktionalisierten Bausteinen, vorzugsweise mit 4 bis 20 C-Atomen in der cycloaliphatischen Kette, bevorzugt ω-Laurinlactam, ε-Caprolactam, besonders bevorzugt ε-Caprolactam,
oder einer Mischung aus L) und M) als Amidanteil, wobei der Esteranteil I) und/oder K) mindestens 30 Gew.-%, bezogen auf die Summe aus I), K), L) und M) beträgt, vorzugsweise der Gewichtsanteil der Esterstrukturen 30 bis 70 Gew.-%, der Anteil der Amidstrukturen 70 bis 30 Gew.-% beträgt,
handelt.

5. Biologisch abbaubare und kompostierbare, mehrschichtige Folie nach Ansprüchen 1 bis 4, dadurch gekennzeichnet, dass der Anteil an Gleitmitteln im Bereich von 0,005 bis 4 Gew.-% in einer oder mehreren Schichten sowie der Anteil an Antiblockmitteln in den äußeren Deckschichten im Bereich von 0,005 bis 4 Gew.-% liegt.

6. Biologisch abbaubare und kompostierbare, mehrschichtige Folie nach Ansprüchen 1 bis 5, dadurch gekennzeichnet, dass die biologisch abbaubaren Polymere zunächst durch Wärme- und Schereinwirkung aufgeschlossen, diese Schmelze in einem Werkzeug als Folienschlauch oder Flachfilm ausgetragen und bis zur Verfestigung abgekühlt werden.

7. Biologisch abbaubare und kompostierbare, mehrschichtige Folie nach Ansprüchen 1 bis 6, dadurch gekennzeichnet, dass die Schlauchfolie nach der Abkühlung bei teilkristallinen Werkstoffen auf Temperaturen oberhalb der Glasübergangstemperaturen und unterhalb der Kristallitschmelztemperaturen und bei amorphen Werkstoffen oberhalb der Glasübergangstemperaturen temperiert und anschließend ein oder mehrfach biaxial verstreckt und nach der oder den einzelnen Verstreckungen gegebenenfalls fixiert und nach diesen Verstreck- und Fixiervorgängen gegebenenfalls oberflächenbehandelt werden.

8. Biologisch abbaubare und kompostierbare, mehrschichtige Folie nach Ansprüchen 1 bis 7, dadurch gekennzeichnet, dass die Flachfolie nach der Abkühlung bei teilkristallinen Werkstoffen auf Temperaturen oberhalb der Glasübergangstemperaturen und unterhalb der Kristallitschmelztemperaturen und bei amorphen Werkstoffen oberhalb der Glasübergangstemperaturen temperiert und anschließend ein oder mehrfach monoaxial oder biaxial verstreckt und nach der oder den einzelnen Verstreckungen eventuell fixiert und nach diesen Verstreck- und Fixiervorgängen eventuell oberflächenbehandelt werden.

9. Biologisch abbaubare und kompostierbare, mehrschichtige Folie nach Ansprüchen 1 bis 8, dadurch gekennzeichnet, dass die biaxiale Verstreckung im Simultanreckverfahren oder im zweistufigen sequentiellen Verfahren, wobei sowohl zuerst längs- und dann quergereckt als auch zuerst quer- und dann längsgereckt werden kann, oder im dreistufigen sequentiellen Verfahren, wobei sowohl zuerst längs-, dann quer- und abschließend längsgereckt als auch zuerst quer-, dann längs- und abschließend quergereckt werden kann, oder im vierstufigen sequentiellen Verfahren, wobei sowohl zuerst längs-, dann quer, dann längs- und abschließend quergereckt als auch zuerst quer-, dann längs-, dann quer- und abschließend längsgereckt werden kann, erfolgt und sich eventuell an jede einzelne Verstreckung eine Fixierung des Films anschließen kann.

10. Biologisch abbaubare und kompostierbare, mehrschichtige Folie nach Ansprüchen 1 bis 9, dadurch gekennzeichnet, dass das Gesamtreckverhältnis der biaxial gereckten Folie in Längsrichtung 1 : 1,5 bis 1 : 10 und das Gesamtreckverhältnis in Querrichtung 1 : 2 bis 1 : 20 beträgt.

11. Biologisch abbaubare und kompostierbare, mehrschichtige Folie nach Ansprüchen 1 bis 10, dadurch gekennzeichnet, dass die Foliendicke kleiner als 500 µm ist.

12. Verwendung der biologisch abbaubaren und kompostierbaren, mehrschichtigen Folie nach Ansprüchen 1 bis 11 die als Verpackungsmaterial verwendet wird.

13. Verwendung der biologisch abbaubaren und kompostierbaren mehrschichtigen Folie gemäß Anspruch 1 bis 11 als Treibhausabdeckung oder Mulchfolie.

14. Verwendung der biologisch abbaubaren und kompostierbaren mehrschichtgen Folie gemäß Anspruch 1 bis 11 in Kosmetik- und Hygieneartikeln.
